# EUROPEAN PATENT SPECIFICATION

(11) **EP 3 258 329 B1**
(45) Date of publication and mention of the grant of the patent: **27.10.2021**
(21) Application number: 16776404.2
(22) Date of filing: 23.03.2016
(51) Int. Cl.: G05B 19/05

(54) **PROGRAMMABLE LOGIC CONTROLLER, METHOD FOR CONTROLLING PROGRAMMABLE LOGIC CONTROLLER, AND CONTROL PROGRAM**
SPEICHERPROGRAMMIERBARES STEUERGERÄT, VERFAHREN ZUR STEUERUNG EINES SPEICHERPROGRAMMIERBAREN STEUERGERÄTS UND STEUERUNGSPROGRAMM
AUTOMATE PROGRAMMABLE, PROCÉDÉ DE COMMANDE D'AUTOMATE PROGRAMMABLE ET PROGRAMME DE COMMANDE

(30) Priority: 06.04.2015 JP 2015078088
(43) Date of publication of application: 20.12.2017
(73) Proprietor: Omron Corporation, Kyoto-shi, Kyoto 600-8530 (JP)
(72) Inventor: MURAYAMA, Shinji, Kyoto-shi Kyoto 600-8530 (JP)
(74) Representative: Horn Kleimann Waitzhofer Patentanwälte PartG mbB
(86) International application number: PCT/JP2016/059199
(87) International publication number: WO 2016/163236

(56) References cited:
- JP-A- 2006 011 887
- JP-A- 2011 215 822
- HAMMERSTINGL VEIT ET AL: "Unified Plug&Produce architecture for automatic integration of field devices in industrial environments", 2015 IEEE INTERNATIONAL CONFERENCE ON INDUSTRIAL TECHNOLOGY (ICIT), IEEE, 17 March 2015 (2015-03-17), pages 1956-1963, XP032785325, DOI: 10.1109/ICIT.2015.7125383 [retrieved on 2015-06-16]
- Anonymous: "IO-Link System Description - Technology and Application", , 1 July 2013 (2013-07-01), pages 1-20, XP055620188, Retrieved from the Internet: URL:https://io-link.com/share/Downloads/At -a-glance/IO-Link_System_Description_engl_ 2013.pdf [retrieved on 2019-09-09]

## Description

### TECHNICAL FIELD

The present invention relates mainly to a programmable logic controller, a method for controlling a programmable logic controller as well as a control program.

### BACKGROUND ART

EtherCAT is known as an industrial open network. EtherCAT is used as a field network. An IO-Link system constructed with a master that conducts point-to-point communication with a device such as a sensor and an actuator is known.

A network system constructed with a programmable controller including a function as an EtherCAT master, a device including a function as an EtherCAT slave and a function of an IO-Link master, and an IO-Link device has been conventionally used.

A function block (setting value reading FB) that acquires an operation setting value of the IO-Link device from the IO-Link device and a function block (setting value writing FB) that reflects the operation setting value held by the PLC in the IO-Link device are mounted on the PLC.

In order that the setting value writing FB causes the IO-Link device to change operation setting of the IO-Link device, it is necessary for a user to previously record a setting data file for the IO-Link device in the PLC, various operation setting values corresponding to the operation setting being described in the setting data file for the IO-Link device.

Anonymous, "IO-Link System Description ― Technology and Application", 1 July 2013, pages 1-20 (accessed on 9 Sept. 2019 under URL: https://io-link.com/share/Downloads/At-a-glance/IO-Link_System_Description_en gl_2013.pdf) describes the interaction of the various components of an IO-Link system and discloses the remote parameterization of IO-Link devices, wherein a node address or a port number of an IO-Link device may be changed.

### SUMMARY OF THE INVENTION

### PROBLEMS TO BE SOLVED BY THE INVENTION

A network system including many IO-Link devices that should perform the operation based on the same operation setting is considered as a specific example of the network system.

In such a network system, in order that the many IO-Link devices are caused to perform the operation, it is necessary for the user to previously record the setting data files as many as the number of IO-Link devices in the PLC. This is troublesome for the user (problem 1).

A network system including the IO-Link devices of various vendors is considered as another specific example of the network system.

In such a network system, in the case that the PLC calls the setting value writing FB to reflect the operation setting value related to the IO-Link device of an A company in the IO-Link device of a B company, the IO-Link device of the B company can malfunction (problem 2).

Considering the problem 1, an object of the present invention is to make a PLC that can select a control object device that changes the operation setting value using a specific setting data file without limiting to a control object device indicated by destination information included in the setting data file. Another object of the present invention is to make a PLC that solves the problem 2 (that is, a PLC in which a possibility of the malfunction of the control object device due to a false setting change is reduced than ever before).

### MEANS FOR SOLVING THE PROBLEM

In order to solve the problems, according to a first aspect of the present invention, a programmable logic controller includes the features of claim 1.

In order to solve the problems, according to a second aspect of the present invention, a method for controlling a programmable logic controller includes the features of claim 6.

In order to solve the problems, according to a third aspect of the present invention, a control program includes the features of claim 8.

### EFFECT OF THE INVENTION

In the programmable logic controller of the first aspect of the present invention, the control object device that changes the operation setting value using a specific setting data file can be selected without limiting to the control object device indicated by the destination information included in the setting data file.

In the programmable logic controller of the third aspect of the present invention, the possibility of the malfunction of the control object device due to the false setting change is reduced than ever before.

### BRIEF DESCRIPTION OF THE DRAWINGS

Fig. 1 is a block diagram illustrating a configuration of a main part of each personal computer (PC) and a programmable logic controller (PLC) according to a first embodiment of the present invention.
Fig. 2 is a view schematically illustrating a configuration of an industrial network system of the first embodiment including the PC and PLC in Fig. 1.
Fig. 3 is a view illustrating an example of a tool application screen displayed on a display of the PC in Fig. 1.
Fig. 4 is a view illustrating another example of the tool application screen displayed on the display of the PC in Fig. 1.
Fig. 5 is a view illustrating still another example of the tool application screen displayed on the display of the PC in Fig. 1.
Fig. 6 is a view illustrating a data structure of a setting data file produced by the PC in Fig. 1.
Fig. 7 is a view illustrating a setting value writing FB performed by the PLC in Fig. 1 to change an operation setting value of an IO-Link device that is of a control object device.
Fig. 8 is another view illustrating the setting value writing FB.
Fig. 9 is a view schematically illustrating a configuration of an industrial network system according to a second embodiment including a PC of the second embodiment and the PLC of the first embodiment.

### MODES FOR CARRYING OUT THE INVENTION

### <First Embodiment>

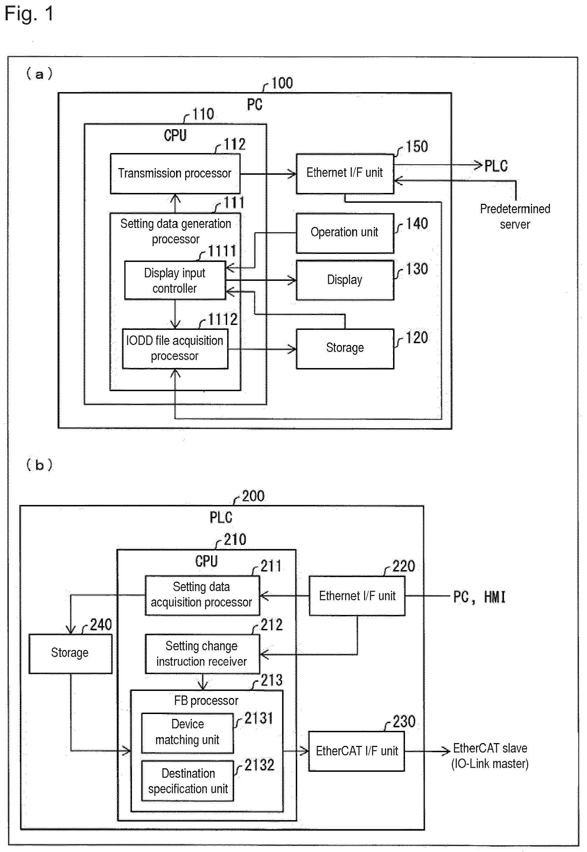

An industrial network system according to a first embodiment of the present invention will be described below with reference to Figs. 1 to 8.

### (System outline and configuration)

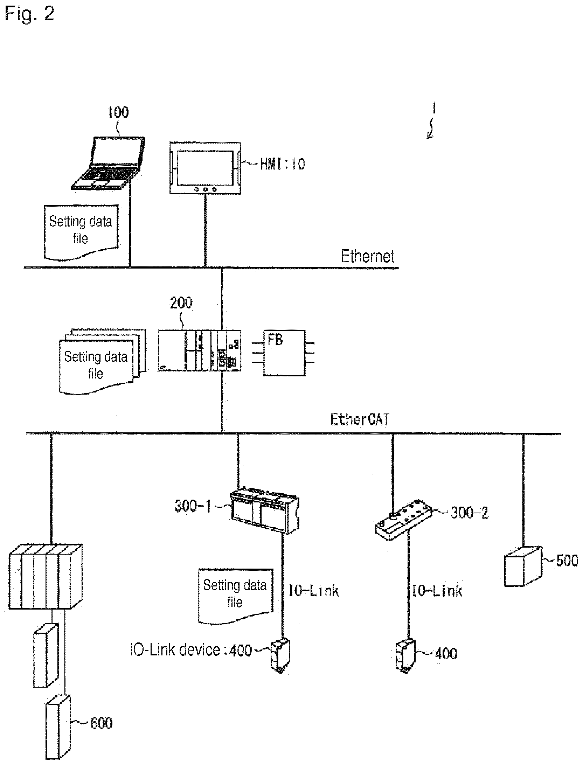

An outline and a configuration of the industrial network system of the first embodiment will be described with reference to Figs. 1 and 2.

Fig. 1 is a block diagram illustrating configurations of a PC 100 and a PLC 200 of the first embodiment. Fig. 2 is a view illustrating a configuration of an industrial network system 1 of the first embodiment.

As can be seen from Figs. 1 and 2, the industrial network system 1 includes an human machine interface (HMI) 10, a personal computer (PC) 100, a programmable logic controller (PLC) 200, slave devices 300-1 and 300-2, an IO-Link device 400 (hereinafter, also referred to as a "device 400" or a "control object device"), a slave device 500 (hereinafter, also referred to as a "device 500" or a "control object device"), and a device 600 (hereinafter, also referred to as a "control object device").

The HMI 10 is a device that is used to change an operation setting of the IO-Link device 400 by an on-site operator. A touch panel type display is provided in the HMI 10.

Many UI components are displayed on the display during the actual operation of the industrial network system 1. The on-site operator touches the proper UI component (specific UI component) selected from many UI components, which allows the on-site operator to cause the desired device 400 (control object device) in plural devices 400 to perform desired operation in predetermined plural kinds of operation.

When receiving a touch operation on the UI component, the HMI 10 issues an instruction to the PLC 200 to perform the control such that the desired device 400 performs desired operation. That is, the HMI 10 transmits instruction data indicating a specific content of the instruction to the PLC 200.

The PC 100 is a personal computer that is used by a system manager in order to produce a setting data file including various operation setting values used to cause the device 400 to perform desired operation and to record a produced setting data file in the PLC 200.

The PLC 200 is an EtherCAT master, and conducts EtherCAT communication with the slave device.

The PLC 200 holds a function block (setting value writing FB) having a function of changing various operation setting values of the device 400 (control object device).

When the PLC 200 calls the setting value writing FB with an instruction (setting change instruction) from the HMI 10 as a trigger, the setting value writing FB performs the following operation. That is, the setting value writing FB refers to a specific setting data file corresponding to the specific UI component in many setting data files held by the PLC 200, and transmits the referred-to setting data file to the control object device.

The slave device (device 300-1, device 300-2) acts as an EtherCAT slave and an IO-Link master. The slave device transfers the setting data file to the IO-Link device 400 when acquiring the setting data file from the PLC 200 in order to change the operation setting value of the IO-Link device 400 point-to-point connected to own device.

The devices 300-1 and 300-2 will more specifically be described below.

The device 300-1 is a device in which plural functional units are connected through a system bus while being able to exchange data with each other. One of the plural functional units controls communication with the EtherCAT master and data exchange with other functional units through the system bus. Another one of the plural functional units is operated as the IO-Link master that is connected to the IO-Link device 400 to conduct communication.

The device 300-2 includes a function of conducting communication with the EtherCAT master and a function of conducting communication with the IO-Link device 400.

When the setting data file is transferred from the IO-Link device 400, the device 400 changes various operation setting values of the own device based on a content of the setting data file, and performs the operation desired by the on-site operator.

The device 500 is a device (control object device such as a sensor and an actuator) that acts as not the IO-Link master but the EtherCAT slave.

The device 600 is a device (the control object device such as a sensor and an actuator) connected to one of functional units of the slave device (the slave device that acts as not the IO-Link master but the EtherCAT slave) including plural functional units.

Configurations of the PC 100 and PLC 200 will be described below with reference to Fig. 1.

### (Configuration of PC 100)

As illustrated in (a) of Fig. 1, the PC 100 includes a CPU 110, a storage 120, a display 130, an operation unit 140, and an Ethernet (registered trademark) I/F unit 150.

### The CPU 110 integrally controls a whole of the PC 100.

The storage 120 is a recording medium in which a predetermined tool application is installed. A setting data file produced by the tool application is also stored in the storage 120. Details of the tool application will be described later.

The display 130 is a display screen on which a screen of the tool application is displayed.

The operation unit 140 is an operation device (such as a keyboard) that operates the tool application.

The Ethernet I/F unit 150 is a communication interface that conducts Ethernet communication (TCP/IP communication).

The CPU 110 acts as a setting data generation processor 111 and a transmission processor 112 by reading the tool application.

The setting data generation processor 111 generates a setting data file that is referred to by a setting value writing FB of the PLC 200.

The setting data generation processor 111 includes a display input controller 1111 and an IODD file acquisition processor 1112.

The display input controller 1111 produces the setting data file from an IODD file that is of a file related to at least one item indicating the operation setting value of the device 400, and displays a tool application screen indicating at least one item in the setting data file on the display 130. The display input controller 1111 also control setting of a value of the item by input from a user.

The IODD file acquisition processor 1112 acquires an IODD file from an outside (in the first embodiment, a predetermined server). The IODD file of the first embodiment is a file in which a value settable for the functional item and a default operation setting value of the functional item in each functional item of the device 400 are indicated.

The transmission processor 112 transmits the setting data file generated by the setting data generation processor 111 to the PLC 200.

### (Configuration of PLC 200)

As illustrated in (b) of Fig. 1, the PLC 200 includes a CPU 210, an Ethernet I/F unit 220, an EtherCAT I/F unit 230, and a storage 240.

The CPU 210 integrally controls a whole of the PLC 200.

The Ethernet I/F unit 220 is a communication interface that conducts Ethernet communication (TCP/IP communication).

The EtherCAT I/F unit 230 is a communication interface that conducts EtherCAT communication.

The storage 240 is a recording medium in which various FBs such as a setting value reading FB and the setting value writing FB are recorded. The setting data file transmitted from the PC 100 is also recorded in the storage 240.

The CPU 210 acts as a setting data acquisition processor 211, a setting change instruction receiver 212, and an FB processor 213.

The setting data acquisition processor 211 acquires the setting data file transmitted from the PC 100 to the PLC 200, and records the acquired setting data file in the storage 240.

The setting change instruction receiver 212 causes the FB processor 213 to call the setting value writing FB with the setting change instruction from the HMI 10 as the trigger.

FB processor 213 (FB executing unit) reads various FBs and executes the read FB.

In the case that the FB processor 213 calls the setting value writing FB by the setting change instruction from the HMI 10, the setting value writing FB reads the specific setting data file corresponding to the content of the setting change instruction from the storage 120, and transmits the read setting data file to an EtherCAT network (the slave device connected to the control object device).

In the first embodiment, the FB processor 213 includes a device matching unit 2131 and a destination specification unit 2132 (object specification unit).

In the case that a predetermined input variable of the setting value writing FB is a predetermined value, the device matching unit 2131 acquires a vendor ID and a device ID from the device 400 designated by the on-site operator. When a vendor ID stored in the setting data file is matched with the vendor ID acquired from the device 400, and when a device ID (device ID information) stored in the setting data file is matched with the device ID acquired from the device 400, the device matching unit 2131 outputs information indicating "successful matching", and outputs information indicating "failed matching" otherwise.

In the first embodiment, the device matching unit 2131 can change whether the matching processing is performed according to the setting of the industrial network system 1.

The destination specification unit 2132 specifies a destination of the control object device by a method based on the setting change instruction from the HMI 10.

### (Method 1)

The destination of the control object device is specified based on destination information included in the specific setting data file. In this case, the "specific setting data file" is, for example, a file having a file name indicating a name of the control object device and the content of the post-setting-change operation, and is a setting data file including the destination information and various operation setting values corresponding to the post-setting-change operation.

### (Method 2)

The destination of the control object device is specified based on separately-designated destination information (destination information included in the instruction data from the HMI 10). In this case, the "specific setting data file" is, for example, a file having a file name indicating the content of the post-setting-change operation, and is a setting data file including the destination information and various operation setting values corresponding to the post-setting-change operation.

The destination specification unit 2132 can appropriately switch the method 1 and the method 2 according to the setting of the industrial network system 1.

The destination information of the first embodiment is at least one of (1) a node address of the EtherCAT network managed by the PLC 200, (2) a unit number of a device (not illustrated, the slave device) including plural units, the device being connected to the PLC 200, and (3) a port number of the slave device including plural ports, the slave device being connected to the PLC 200.

Examples of the destination information include a combination (the destination information about the device 400 connected to the device 300-1) of a node address (node number), a unit number, and a port number, a combination (the destination information about the device 600) of the node address and the unit number, a combination (the destination information about the device 400 connected to the device 300-2) of the node address and the port number, and the node number (the destination information about the device 500).

The configurations of the PC 100 and PLC 200 are described above.

### (Production of setting data file)

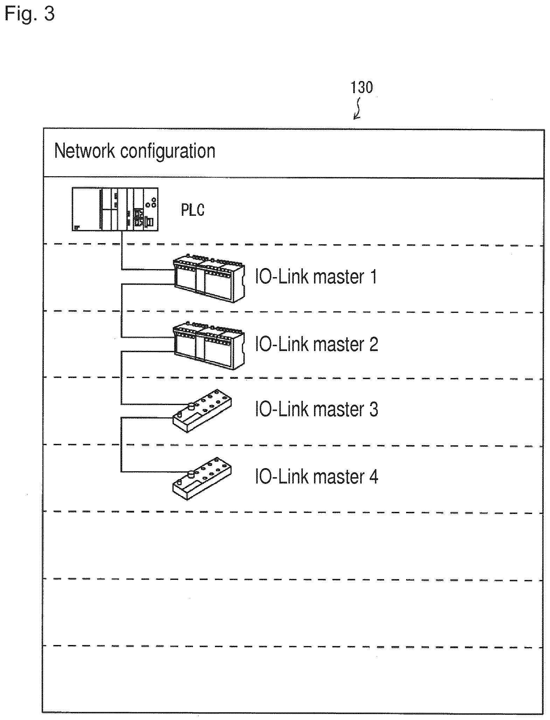

How to produce the setting data file using the tool application installed in the PC 100 will be described in detail with reference to Figs. 3 to 5. Figs. 3 to 5 are views illustrating a screen of the tool application.

When the PC 100 starts up the tool application, the tool application (display input controller 1111) detects the PLC 200 and at least one slave device in the industrial network system 1, and displays a screen indicating a network configuration on the display 130 based on a detection result as illustrated in Fig. 3.

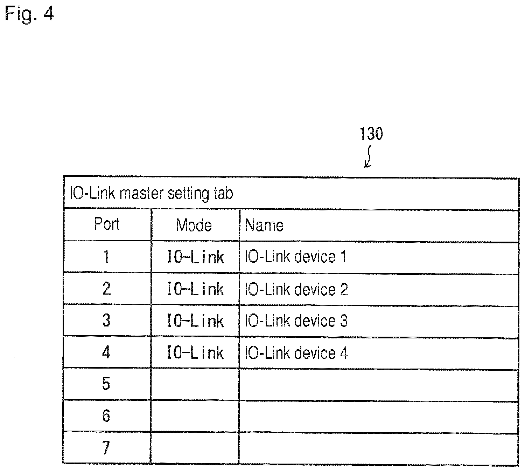

When a user (system manager) performs operation to select the slave device that acts as the IO-Link master through the screen in Fig. 3, the tool application (display input controller 1111) detects at least one device 400 connected to the selected slave device, and displays a list of at least one detected device 400 on the display 130 as illustrated in Fig. 4.

When the user performs operation to select the device 400 (IO-Link device 400) through the screen in Fig. 4, the tool application (IODD file acquisition processor 1112) downloads the IODD file related to the selected device 400 from a predetermined server.

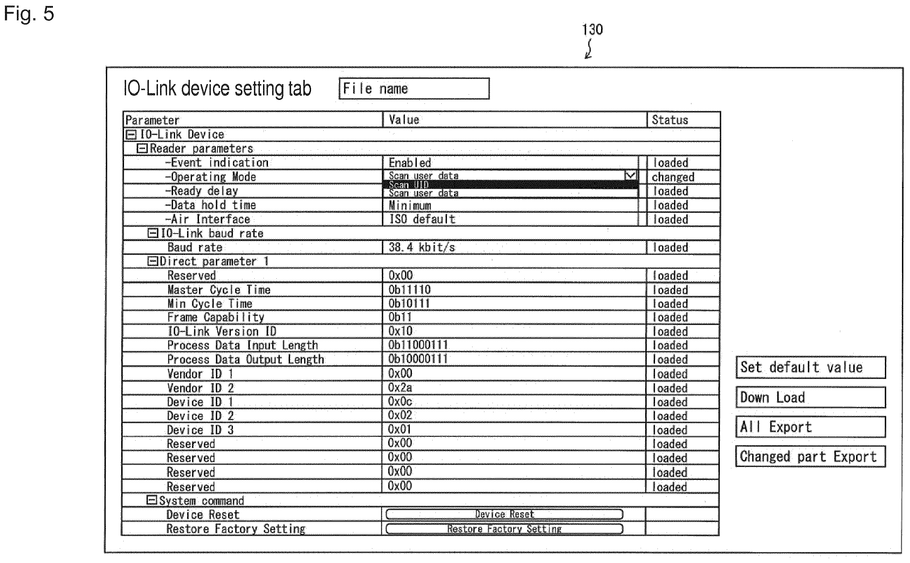

The tool application (display input controller 1111) reads the downloaded IODD file, and displays a screen in Fig. 5 on the display 130.

When the user presses an "ALL EXPORT" button or a "Changed part Export" button after changing various operation setting values related to the device 400 through the screen in Fig. 5 to input a file name to a text box in an upper portion of the screen, the tool application (setting data generation processor 111) generates the setting data file that reflects the change of the operation setting values of various items , the setting data file having the input file name.

Specifically, the setting data generation processor 111 generates the setting data file including information (all the pieces of setting data related to the device 400) about all the items when the "ALL EXPORT" button is pressed, and generates the setting data file including not the operation setting values of the not-changed items but the operation setting values of the changed items when the "Changed part Export" button is pressed.

The tool application (transmission processor 112) transmits the generated setting data file to the PLC 200.

The user can produce N setting data files by performing the above work at least N (N ≥ 1) times with respect to the selected device 400. That is, the user can produce the setting data file including the operation setting value used to cause the selected device 400 to perform the operation with respect to each of N kinds of the operation.

### (Supplementary information 1 related to screen in Fig. 5)

A "Set default value" button on the screen in Fig. 5 is a button that returns the operation setting values of all the items to default values. A "Down Load" button on the screen in Fig. 5 is a button, which causes the tool application (change data generator) to generate operation setting value change data (data used to directly change the operation setting value of the control object device from the PC 100) including the information about all the items, and to directly transmit (download) the generated operation setting value change data to the control object device.

### (Supplementary information 2 related to screen in Fig. 5)

A screen in which a third button for export is provided may be displayed on the screen in Fig. 5 when the user performs the operation to select the device 400. When the third button is pressed, the setting data generation processor 111 may generate the setting data file including information (part of the setting data related to the device 400) about a predetermined part of the items.

### (Details of setting data file)

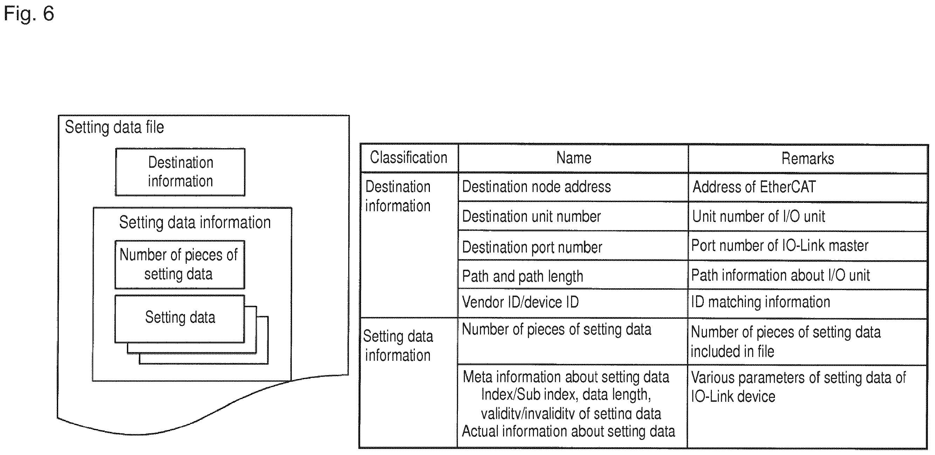

Details of the setting data file will be described with reference to Fig. 6. Fig. 6 is a view illustrating a data structure of the setting data file produced by the PC 100.

As illustrated in Fig. 6, the setting data file includes destination information and setting data information. As illustrated in Fig. 6, the destination information includes various pieces of information about the destination of the control object device, and the setting data information includes at least one piece of setting data and information indicating the number of pieces of setting data included in the setting data file.

The setting data includes meta information and actual information, and the meta information about the setting data includes various pieces of information (such as a data length of the actual information) related to the actual information about the setting data.

### (Details of instruction data and setting value writing FB)

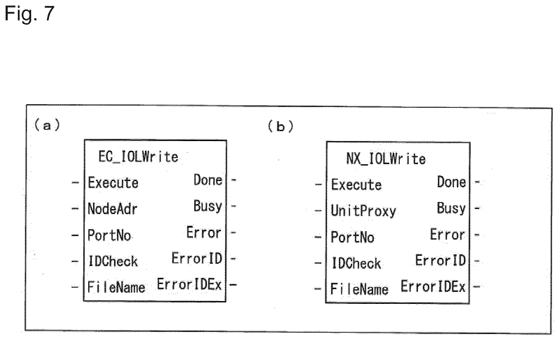

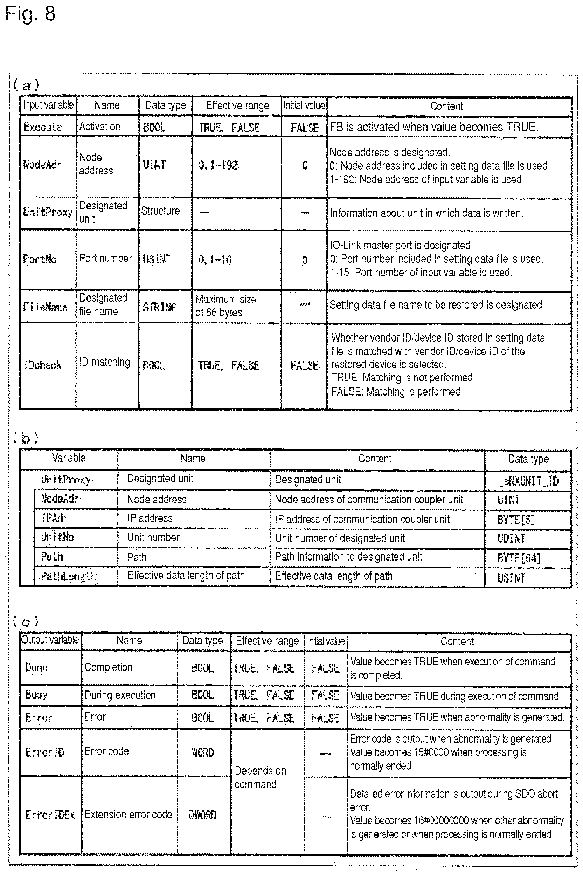

Details of the instruction data and setting value writing FB will be described with reference to Figs. 7 and 8. Figs. 7 and 8 are views illustrating the setting value writing FB. In the first embodiment, the PLC 200 uses EC_IOLWRITE in (a) of Fig. 7 and/or NX_IOLWRITE in (b) of Fig. 7 as the setting value writing FB.

As can be seen from Figs. 7 and 8, EC_IOLWRITE and NX_IOLWRITE operate by receiving five input variables. The five input variables are included in the instruction data.

(a) to (c) of Figs. 8 illustrate details of the five input variables. In the first embodiment, because four input variables of NodeAdr, UnitProxy, PortNo, and IDcheck have features in input variables of Fig. 8, the four input variables will be described in detail below.

### (Variable NodeAdr and variable UnitProxy)

The variable NodeAdr is a variable that is referred to by EC_IOLWRITE in order to specify the destination of the control object device (the device 400).

The variable UnitProxy is a variable that is referred to by NX_IOLWRITE in order to specify the destination of the control object device. As illustrated in (b) of Fig. 8, the variable UnitProxy is a structure type variable, and one of plural member variables of the variable UnitProxy is the variable NodeAdr.

In the case that the destination of the control object device is set by the method 1, the HMI 10 transmits the instruction data including a value "0" of the variable NodeAdr to the PLC 200. In the case that the destination of the control object device is set by the method 2, the HMI 10 transmits the instruction data including a value i (i is an integer of 1 to 192) of the variable NodeAdr to the PLC 200.

As can be seen from (a) of Fig. 7 and (a) of Fig. 8, EC_IOLWRITE specifies the destination based on the node address included in the setting data file in the case that the input variable NodeAdr included in the instruction data is the value "0", and EC_IOLWRITE specifies the destination based on the value (separately-designated information) of the input variable NodeAdr in the case that the input variable NodeAdr is not the value "0" (object specification step).

As can be seen from (b) of Fig. 7 and (b) of Fig. 8, NX_IOLWRITE specifies the destination based on the node address included in the setting data file in the case that the member variable NodeAdr included in the instruction data is the value "0", and NX_IOLWRITE specifies the destination based on the value of the member variable NodeAdr in the case that the member variable NodeAdr is not the value "0" (object specification step).

### (Variable PortNo)

The variable PortNo is a variable that is referred to by EC_IOLWRITE and NX_IOLWRITE in order to specify the destination of the control object device.

In the case that the destination of the control object device is set by the method 1, the HMI 10 transmits the instruction data including the value "0" of the variable PortNo to the PLC 200. In the case that the destination of the control object device is set by the method 2, the HMI 10 transmits the instruction data including a value j (j is an integer of 1 to 16) of the variable PortNo to the PLC 200.

As can be seen from (a) of Fig. 7 and (a) of Fig. 8, EC_IOLWRITE (NX_IOLWRITE) specifies the destination based on the port number included in the setting data file in the case that the variable PortNo included in the instruction data is the value "0", and EC_IOLWRITE specifies the destination based on the value of the variable PortNo in the case that the variable PortNo is not the value "0" (object specification step).

### (Variable IDcheck)

The variable IDcheck is a variable that is referred to by EC_IOLWRITE and NX_IOLWRITE in order to determine whether the matching processing is performed. That is, the variable IDcheck is the "predetermined input variable".

The HMI 10 transmits the instruction data including a value "FALSE" (the "predetermined value") of the variable IDcheck to the PLC 200 in the case that the performance of the matching processing is set to be valid, and the HMI 10 transmits the instruction data including a value "TRUE" of the variable IDcheck to the PLC 200 in the case that the performance of the matching processing is set to be invalid.

As can be seen from (a) of Fig. 7 and (a) of Fig. 8, EC_IOLWRITE (NX_IOLWRITE) determines that the matching processing is performed in the case that the variable IDcheck is the value "FALSE", and EC_IOLWRITE(NX_IOLWRITE) determines that the matching processing is not performed in the case that the variable IDcheck is the value ""TRUE".

EC_IOLWRITE(NX_IOLWRITE) performs the matching processing when the determination that the matching processing is performed is made (device matching step).

As a result of the performance of the matching processing in the device matching step, when the vendor ID stored in the setting data file is not matched with the vendor ID acquired from the device 400, or when the device ID stored in the setting data file is not matched with the device ID acquired from the device 400, EC_IOLWRITE(NX_IOLWRITE) outputs the information indicating "failed matching". That is, EC_IOLWRITE and NX_IOLWRITE output five output variables in (c) of Fig. 8 including an output variable ErrorID indicating "failed matching".

On the other hand, as a result of the performance of the matching processing in the device matching step, when the vendor ID stored in the setting data file is matched with the vendor ID acquired from the device 400, and when the device ID stored in the setting data file is matched with the device ID acquired from the device 400, EC_IOLWRITE(NX_IOLWRITE) outputs the information indicating "successful matching". EC_IOLWRITE(NX_IOLWRITE) transmits the setting data file to the EtherCAT network (the slave device connected to the control object device) in the case that EC_IOLWRITE(NX_IOLWRITE) outputs the information indicating "successful matching".

### (Other variables)

An input variable FileName is a variable indicating a file name of the "predetermined setting data file" (that is, the setting data file to be restore by the control object device), which should be read from the storage 240 by EC_IOLWRITE(NX_IOLWRITE) and transmitted to the control object device.

The details of the instruction data and setting value writing FB are described above.

As a result of the above processing performed by the setting value writing FB, the control object device receives and records the setting data file to be restored, and changes the operation setting value of the own device based on the restored setting data file. That is, the control object device performs the operation desired by the on-site operator.

### <Second Embodiment>

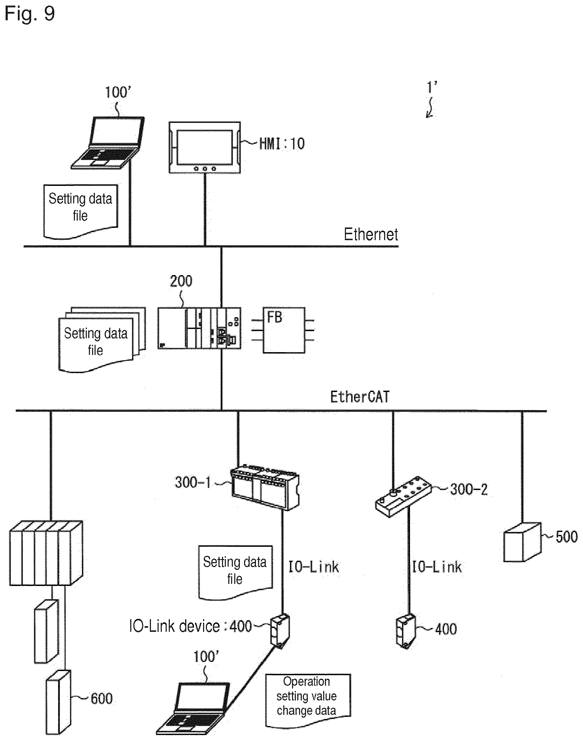

An industrial network system according to a second embodiment of the present invention will be described below with reference to Fig. 9. The component having the same or substantially same function as the first embodiment is basically designated by the same symbol for convenience sake, and the description will be omitted.

Fig. 9 is a view illustrating a configuration of the industrial network system of the second embodiment.

As illustrated in Fig. 9, an industrial network system 1' of the second embodiment includes a PC 100' instead of the PC 100 of the first embodiment.

The PC 100' differs from the PC 100 in the following point.

In the case that the user performs the operation to select the device 400 on the screen in Fig. 4, the tool application of the PC 100' displays a screen in which a fourth button and a fifth button for download are provided in the screen of Fig. 5.

The tool application performs the following processing in the case that the fourth button or the fifth button is pressed while the PC 100' and the control object device are directly connected to each other by a cable.

That is, in the case that the fourth button is pressed, the tool application (change data generator) generates the operation setting value change data including the information about a predetermined part of the items, and transmits (downloads) the generated operation setting value change data to the device 400.

Similarly, in the case that the fifth button is pressed, the tool application (change data generator) generates the operation setting value change data including not the operation setting value of the not-changed items but the operation setting value of the changed items, and transmits (downloads) the generated operation setting value change data to the device 400.

### (First modification of first and second embodiments)

A site where the industrial network system is installed may be divided into plural sections. One device 400 or plural devices 400 of the same kind may be installed in each section.

In this case, the HMI 10 may display the UI component that causes all the devices 400 (control object devices) installed in an object section to perform the desired operation with respect to each of the plural sections. The system manager may set the industrial network system such that the PLC 200 adopts the method 2 in order to specify the destination of the device 400.

When the on-site operator performs the operation to tap a specific UI component, the HMI 10 may generate the instruction data including "the variable NodeAdr indicating the node address of the device 400" with respect to all the devices 400 (Q control object devices) in the section corresponding to the UI component.

When the PLC 200 acquires the instruction data generated by the HMI 10, the destination specification unit 2132 may refer to each (separately-designated information) of the Q variables NodeAdr included in the instruction data, and specify plural (Q) destinations of the control object device based on the separately-designated information.

In the first modification, the system manager may produce the setting data files as many as the number of kinds of the operation that the on-site operator desires using the device 400 installed in the object section in each section.

That is, in the first modification, the system manager needs not to produce the setting data files as many as the number of kinds of the operation that the on-site operator desires using the object device 400 in each device.

Accordingly, in the first modification, the system manager can produce all the necessary setting data files with less labor and time.

### (Second modification of first and second embodiments)

In the first and second embodiments, when a vendor ID stored in the setting data file is matched with the vendor ID acquired from the device 400, and when a device ID (device ID information) stored in the setting data file is matched with the device ID acquired from the device 400, the device matching unit 2131 outputs the information indicating the "successful matching", and outputs the information indicating the "failed matching" otherwise. However, the present invention is not limited to the above configuration, but a configuration according to the following modification is also included in the scope of the present invention.

A system according to a second modification differs from the systems of the first and second embodiments in the following points.

That is, a serial number unique to the device 400 is described in the setting data file in addition to various pieces of information (such as a device ID unique to a type corresponding to the device 400) described in the setting data files of the first and second embodiments.

In the second modification, in the case that the performance of the matching processing is set to be valid, the device matching unit 2131 outputs the information indicating the "successful matching" when the following three conditions are satisfied, and outputs the information indicating the "failed matching" otherwise.

### (Condition 1)

The vendor ID stored in the setting data file is matched with the vendor ID acquired from the device 400.

### (Condition 2)

The device ID stored in the setting data file is matched with the device ID acquired from the device 400.

### (Condition 3)

The serial number stored in the setting data file is matched with the serial number acquired from the device 400.

The PLC including the following device matching unit is also included in the scope of the present invention.

That is, the PLC including the device matching unit that outputs the information indicating "successful matching" when any one (for example, the condition 2 or the condition 3) or two of the conditions 1 to 3 are satisfied and outputs the information indicating the "failed matching" otherwise is also included in the scope of the present invention.

### (Supplementary information 1 related to first and second embodiments)

The systems of the first and second embodiments include the slave device (such as the device 300-1 and the device 300-2) that acts as the IO-Link master while acting as the EtherCAT slave and the slave device (such as the device 500) that acts as not the IO-Link master but the EtherCAT slave.

However, the present invention is not limited to the systems of the first and second embodiments.

That is, all the slave devices (the device acting as the EtherCAT slave) included in the systems may be the device acting as the IO-Link master. Alternatively, all the slave devices included in the systems may be the device that does not act as the IO-Link master. In other words, in the present invention, the IO-Link master and the IO-Link device are not necessarily provided.

### (Supplementary information 2 related to first and second embodiments)

The PLCs 200 of the first and second embodiments are the programmable logic controller that solves the problems 1 and 2. However, the programmable logic controller of the present invention is not limited to the PLC 200.

For example, the PLC (the PLC including not the device matching unit 2131 but the destination specification unit 2132) that solves not the problem 2 but the problem 1 or the PLC (the PLC including not the destination specification unit 2132 but the device matching unit 2131) that solves not the problem 1 but the problem 2 is also included in the scope of the programmable logic controller of the present invention.

### <Third Embodiment>

The PCs (PCs 100 and 100') of the first and second embodiments and a control block (particularly, the setting data generation processor 111, the transmission processor 112, and the FB processor 213) of the PLC 200 may be constructed with a logic circuit (hardware) formed in an integrated circuit (IC chip), or implemented by software using a central processing unit (CPU).

In the latter, the PCs and the PLC include the CPU that executes a command of the program that is of the software implementing each function, a read only memory (ROM) or a storage device (referred to as a recording medium) in which the program and various pieces of data are stored while being readable by a computer (or the CPU), and a random access memory (RAM) in which the program is expanded. The computer (or the CPU) reads the program from the recording medium, and executes the program, thereby achieving the object of the present invention. A "non-transient physical medium" such as a tape, a disk, a card, a semiconductor memory, and a programmable logic circuit can be used as the recording medium. The program may be supplied to the computer through any transmission medium (such as a communication network and a broadcasting wave) in which the program can be transmitted. The present invention can be made in a form of a data signal embedded in a carrier wave, the data signal being materialized by electronic transmission of the program.

### [Summary]

According to a first aspect of the present invention, a programmable logic controller includes: a function block (FB) executing unit configured to an FB including a function of changing an operation setting value of a control object device; and a storage in which a setting data file referred to during operation of the FB is stored. The FB executing unit includes an object specification unit configured to specify a destination of the control object device, and the object specification unit can switch between the specification of the destination of the control object device based on destination information included in the setting data file and the specification of the destination of the control object device based on separately-designated information.

According to the configuration, the specification of the destination of the control object device based on destination information included in the setting data file and the specification of the destination of the control object device based on separately-designated information can be switched when the FB changes the operation setting value of the control object device.

That is, the control object device that changes the operation setting value using a specific setting data file can be selected without limiting to the control object device indicated by the destination information included in the setting data file.

According to a second aspect of the present invention, a method for controlling a programmable logic controller includes: a function block (FB) executing unit configured to execute an FB including a function of changing an operation setting value of a control object device; and a storage in which a setting data file referred to during operation of the FB is stored, and the method for controlling the programmable logic controller includes the step of specifying a destination of the control object device using the FB executing unit. The specification of the destination of the control object device based on destination information included in the setting data file and the specification of the destination of the control object device based on separately-designated information can be switched in the object specification step.

According to the configuration, the method has the effect similar to that of the programmable logic controller.

In the programmable logic controller, the object specification unit may specify plural destinations of the control object device using the separately-designated information.

According to the configuration, the PLC can specify the plural destinations of the control object device, user's labor and time can largely be reduced in the case that the similar operation setting value is set to the plural control object devices.

In the programmable logic controller, the object specification unit may specify the destination of the control object device using at least one of (1) a node address of a network managed by the programmable logic controller, (2) a unit number of a slave device including plural units, the slave device being connected to the programmable logic controller, and (3) a port number of the slave device including the plural units, the slave device being connected to the programmable logic controller.

According to the configuration, the programmable logic controller can properly specify the destination of the control object device using at least one of the node address, the unit number, and the port number.

According to a third aspect of the present invention, a programmable logic controller includes: a function block (FB) executing unit configured to execute an FB including a function of changing an operation setting value of a control object device; and a storage in which a setting data file referred to during operation of the FB is stored. The FB executing unit includes a device matching unit configured to match a device ID of the control object device, and the device matching unit acquires the device ID of the control object device, and matches the acquired device ID with device ID information included in the setting data file.

According to the configuration, the programmable logic controller acquires the device ID of the control object device, and matches the acquired device ID with the device ID information included in the setting data file. Therefore, the malfunction caused by improperly setting the operation setting value to the control object device due to an error of the destination information included in the setting data file can be prevented.

According to a fourth aspect of the present invention, a method for controlling a programmable logic controller includes: a function block (FB) executing unit configured to execute an FB including a function of changing an operation setting value of a control object device; and a storage in which a setting data file referred to during operation of the FB is stored, and the method for controlling the programmable logic controller includes the step of matching a device ID of the control object device using the FB executing unit. In the device matching step, the device ID of the control object device is acquired, and the acquired device ID is matched with device ID information included in the setting data file.

According to the configuration, the method has the effect similar to that of the programmable logic controller.

In the programmable logic controller, the device matching unit may acquire the device ID of the control object device, and switch whether matching processing of matching the acquired device ID with the device ID information included in the setting data file is performed.

In the programmable logic controller, the device matching unit may acquire a serial number unique to the control object device, and switch whether matching processing of matching the acquired serial number with a serial number described in the setting data file is performed.

According to the configuration, whether the matching processing is performed is switched, so that the matching processing can be performed as needed. Therefore, in the case that the matching processing is not required, omission of the matching processing can reduce a processing time, a load on a communication line, and a load on the PLC.

The scope of the present invention includes a control program causing a computer to act as the programmable logic controller according to any one of the aspects, and causing the computer to act as the FB executing unit.

### INDUSTRIAL APPLICABILITY

The present invention can suitably be used in the industrial network system.

### DESCRIPTION OF SYMBOLS

- 100, 100': PC

- 110: CPU
- 111: setting data generation processor
- 112: transmission processor
- 1111: display input controller 1112IODD file acquisition processor
- 200: programmable logic controller (PLC)
- 210: CPU
- 213: FB processor (FB executing unit)
- 2131: device matching unit
- 2132: destination specification unit (object specification unit)
- 240: storage
- 300-1, 300-2: slave device
- 400: IO-Link device (control object device)

## Claims

1. A programmable logic controller (200) comprising:
a function block (FB) executing unit (213) configured to execute an FB including a function of changing an operation setting value of a control object device (400), wherein the operation setting value is usable to cause the control object device (400) to perform a desired operation; and
a storage (240) in which a setting data file referred to during operation of the FB is stored, wherein the setting data file includes at least destination information and the operation setting value,
wherein the FB executing unit (213) comprises an object specification unit (2132) configured to specify a destination of the control object device (400), and
the object specification unit (2132) is adapted to switch, in accordance with a setting change instruction from a human machine interface, between the specification of the destination of the control object device (400) based on the destination information comprised in the setting data file and the specification of the destination of the control object device (400) based on destination information comprised in instruction data from the human machine interface,
wherein the destination of the control object device (400) is at least one of
- a node address of a network managed by the programmable logic controller (200),
- a unit number of a slave device (300-1, 300-2) including a plurality of units, the slave device (300-1, 300-2) being connected to the programmable logic controller (200), and
- a port number of the slave device (300-1, 300-2) including the plurality of units, the slave device (300-1, 300-2) being connected to the programmable logic controller (200),
wherein the setting data file is an IODD file, and
the control object device (400) is an IO-Link device.

2. The programmable logic controller (200) according to claim 1, wherein the object specification unit (2132) is adapted to specify a plurality of destinations of the control object device (400) using the destination information comprised in the instruction data from the human machine interface.

3. The programmable logic controller (200) according to claim 1,
wherein the FB executing unit (213) comprises a device matching unit (2131) configured to match a device ID of the control object device (400), and
the device matching unit (2131) is configured to acquire the device ID of the control object device (400), and to match the acquired device ID with device ID information comprised in the setting data file.

4. The programmable logic controller (200) according to claim 3, wherein the device matching unit (2131) is configured to acquire the device ID of the control object device (400), and is adapted to switch whether matching processing of matching the acquired device ID with the device ID information comprised in the setting data file is performed.

5. The programmable logic controller (200) according to claim 3, wherein the device matching unit (2131) is configured to acquire a serial number unique to the control object device (400), and is adapted to switch whether matching processing of matching the acquired serial number with a serial number described in the setting data file is performed.

6. A method for controlling a programmable logic controller (200), the programmable logic controller (200) comprising a function block (FB) executing unit (213) and a storage (240);
the method comprising:
a step in which the function block (FB) executing unit (213) executes an FB including a function of changing an operation setting value of a control object device (400), wherein the operation setting value is usable to cause the control object device (400) to perform a desired operation;
a step in which a setting data file referred to during operation of the FB is stored in the storage (240), the setting data file including at least destination information and the operation setting value, and
a step of specifying a destination of the control object device (400) using the FB executing unit (213),
wherein in accordance with a setting change instruction from a human machine interface, the specification of the destination of the control object device (400) based on destination information comprised in the setting data file and the specification of the destination of the control object device (400) based on destination information comprised in instruction data from the human machine interface are adapted to be switched in the object specification step,
wherein the destination of the control object device (400) is specified using at least one of
- a node address of a network managed by the programmable logic controller (200),
- a unit number of a slave device (300-1, 300-2) including a plurality of units, the slave device (300-1, 300-2) being connected to the programmable logic controller (200), and
- a port number of the slave device (300-1, 300-2) including the plurality of units, the slave device (300-1, 300-2) being connected to the programmable logic controller (200),
wherein the setting data file is an IODD file, and
the control object device (400) is an IO-Link device.

7. The method for controlling a programmable logic controller (200) according to claim 6, further comprising:
the step of matching a device ID of the control object device (400) using the FB executing unit (213),
wherein, in the device matching step, the device ID of the control object device (400) is acquired, and the acquired device ID is matched with device ID information comprised in the setting data file.

8. A control program comprising instructions which, when the program is executed by a programmable logic controller (200) comprising a function block (FB) executing unit (213) and a storage (240), cause the programmable logic controller (200) to carry out the method of claim 6 or 7.

## Patentansprüche

1. Speicherprogrammierbare Steuerung (200), aufweisend:
eine Funktionsblock (FB)-Ausführungseinheit (213), die geeignet ist, einen FB auszuführen, der eine Funktion zum Ändern eines Betriebseinstellungswerts einer Steuerobjektvorrichtung (400) enthält, wobei der Betriebseinstellungswert verwendbar ist, um zu bewirken, dass die Steuerobjektvorrichtung (400) einen gewünschten Betrieb durchführt; und
einen Speicher (240), in dem eine Einstellungsdatendatei, auf die während des Betriebs des FBs Bezug genommen wird, gespeichert wird, wobei die Einstellungsdatendatei zumindest eine Zielinformation und den Betriebseinstellungswert enthält,
wobei die FB-Ausführungseinheit (213) eine Objektspezifikationseinheit (2132) aufweist, die geeignet ist, ein Ziel der Steuerobjektvorrichtung (400) zu spezifizieren, und
die Objektspezifikationseinheit (2132) geeignet ist, in Übereinstimmung mit einem Einstellungsänderungsbefehl von einer Mensch-Maschine-Schnittstelle zwischen der Spezifikation des Ziels der Steuerobjektvorrichtung (400) basierend auf der in der Einstellungsdatendatei enthaltenen Zielinformation und der Spezifikation des Ziels der Steuerobjektvorrichtung (400) basierend auf der in den Befehlsdaten von der Mensch-Maschine-Schnittstelle enthaltenen Zielinformation umzuschalten,
wobei das Ziel der Steuerobjektvorrichtung (400) mindestens eines der folgenden ist:
- eine Knotenadresse eines von der speicherprogrammierbaren Steuerung (200) verwalteten Netzwerks,
- eine Einheitsnummer einer Slave-Vorrichtung (300-1, 300-2), die mehrere Einheiten umfasst, wobei die Slave-Vorrichtung (300-1, 300-2) mit der speicherprogrammierbaren Steuerung (200) verbunden ist, und
- eine Portnummer der Slave-Vorrichtung (300-1, 300-2), die mehrere Einheiten enthält, wobei die Slave-Vorrichtung (300-1, 300-2) mit der speicherprogrammierbaren Steuerung (200) verbunden ist,
wobei die Einstellungsdatendatei eine IODD-Datei ist, und
die Steuerobjektvorrichtung (400) eine IO-Link-Vorrichtung ist.

2. Speicherprogrammierbare Steuerung (200) nach Anspruch 1, wobei die Objektspezifikationseinheit (2132) geeignet ist, mehrere Ziele der Steuerobjektvorrichtung (400) unter Verwendung der in den Befehlsdaten von der Mensch-Maschine-Schnittstelle enthaltenen Zielinformation zu spezifizieren.

3. Speicherprogrammierbare Steuerung (200) nach Anspruch 1,
wobei die FB-Ausführungseinheit (213) eine Geräteabgleichseinheit (2131) aufweist, die geeignet ist, eine Geräteidentifizierung der Steuerobjektvorrichtung (400) abzugleichen, und
die Geräteabgleichseinheit (2131) geeignet ist, die Geräteidentifizierung der Steuerobjektvorrichtung (400) zu erfassen und die erfasste Geräteidentifizierung mit einer in der Einstellungsdatendatei enthaltenen Geräteidentifizierungsinformation abgleicht.

4. Speicherprogrammierbare Steuerung (200) nach Anspruch 3, wobei die Geräteabgleichseinheit (2131) geeignet ist, die Geräteidentifizierung der Steuerobjektvorrichtung (400) zu erfassen, und eingerichtet ist, in Abhängigkeit davon umzuschalten, ob der Abgleich der erfassten Geräteidentifizierung mit den in der Einstellungsdatendatei enthaltenen Geräteidentifizierungsinformation erfolgt ist.

5. Speicherprogrammierbare Steuerung (200) nach Anspruch 3, wobei die Geräteabgleichseinheit (2131) geeignet ist, eine für die Steuerobjektvorrichtung (400) eindeutige Seriennummer zu erfassen, und eingerichtet ist, in Abhängigkeit davon umschalten, ob ein Abgleich der erfassten Seriennummer mit einer in der Einstellungsdatendatei beschriebenen Seriennummer erfolgt ist.

6. Verfahren zum Steuern einer speicherprogrammierbaren Steuerung (200), wobei die speicherprogrammierbare Steuerung (200) eine Funktionsblock (FB)-Ausführungseinheit (213) und einen Speicher (240) aufweist;
wobei das Verfahren umfasst:
einen Schritt, in dem die Funktionsblock (FB)-Ausführungseinheit (213) einen FB ausführt, der eine Funktion zum Ändern eines Betriebseinstellungswerts einer Steuerobjektvorrichtung (400) enthält, wobei der Betriebseinstellungswert verwendbar ist, um zu bewirken, dass die Steuerobjektvorrichtung (400) einen gewünschten Betrieb durchführt;
einen Schritt, in dem eine Einstellungsdatendatei, auf die während des Betriebs des FBs Bezug genommen wird, in dem Speicher (240) gespeichert wird, wobei die Einstellungsdatendatei zumindest eine Zielinformation und den Betriebseinstellungswert enthält, und
einen Schritt des Spezifizierens eines Ziels der Steuerobjektvorrichtung (400) unter Verwendung der FB-Ausführungseinheit (213),
wobei in Übereinstimmung mit einem Einstellungsänderungsbefehl von einer Mensch-Maschine-Schnittstelle die Spezifikation des Ziels der Steuerobjektvorrichtung (400) basierend auf der in der Einstellungsdatendatei enthaltenen Zielinformation, und die Spezifikation des Ziels der Steuerobjektvorrichtung (400) basierend auf der in den Befehlsdaten von der Mensch-Maschine-Schnittstelle enthaltenen Zielinformation eingerichtet sind, um in dem Objektspezifikationsschritt umgeschaltet zu werden,
wobei das Ziel der Steuerobjektvorrichtung (400) spezifiziert wird unter Verwendung von mindestens einem von:
- einer Knotenadresse eines von der speicherprogrammierbaren Steuerung (200) verwalteten Netzwerks,
- einer Einheitsnummer einer Slave-Vorrichtung (300-1, 300-2), die mehrere Einheiten umfasst, wobei die Slave-Vorrichtung (300-1, 300-2) mit der speicherprogrammierbaren Steuerung (200) verbunden ist, und
- eine Portnummer der Slave-Vorrichtung (300-1, 300-2), die mehrere Einheiten enthält, wobei die Slave-Vorrichtung (300-1, 300-2) mit der speicherprogrammierbaren Steuerung (200) verbunden ist,
wobei die Einstelldatendatei eine IODD-Datei ist, und
die Steuerobjektvorrichtung (400) eine IO-Link-Vorrichtung ist.

7. Verfahren zur Steuerung einer speicherprogrammierbaren Steuerung (200) nach Anspruch 6, ferner umfassend:
den Schritt des Abgleichs einer Geräteidentifizierung der Steuerobjektvorrichtung (400) unter Verwendung der FB-Ausführungseinheit (213),
wobei in dem Schritt des Geräteabgleichs die Geräteidentifizierung des Steuerobjektgeräts (400) erfasst wird und die erfasste Geräteidentifizierung mit in der Einstellungsdatendatei enthaltenen Geräteidentifizierungsinformation abgeglichen wird.

8. Steuerprogramm, das Anweisungen umfasst, die, wenn das Programm von einer speicherprogrammierbaren Steuerung (200) ausgeführt wird, die eine Funktionsblock (FB)-Ausführungseinheit (213) und einen Speicher (240) aufweist, die speicherprogrammierbare Steuerung (200) veranlassen, das Verfahren nach Anspruch 6 oder 7 auszuführen.

## Revendications

1. Automate programmable industriel (200), comprenant :
une unité d'exécution (213) de bloc fonctionnel (BF) configurée pour exécuter un BF comprenant une fonction de modification d'une valeur de réglage d'opération d'un dispositif objet de commande (400), dans lequel la valeur de réglage d'opération est utilisable pour amener le dispositif objet de commande (400) à effectuer une opération souhaitée ; et
un stockage (240) dans lequel un fichier de données de réglage auquel il est fait référence pendant le fonctionnement du BF est stocké, dans lequel le fichier de données de réglage comprend au moins une information de destination et la valeur de réglage d'opération,
dans lequel l'unité d'exécution (213) de BF comprend une unité de spécification d'objet (2132) configurée pour spécifier une destination du dispositif objet de commande (400), et
l'unité de spécification d'objet (2132) est adaptée pour commuter, conformément à une instruction de changement de réglage provenant d'une interface machine humaine, entre la spécification de la destination du dispositif objet de commande (400) sur la base de l'information de destination comprise dans le fichier de données de réglage et la spécification de la destination du dispositif objet de commande (400) sur la base de l'information de destination comprise dans les données d'instruction provenant de l'interface machine humaine,
dans lequel la destination du dispositif objet de commande (400) est au moins l'un des éléments suivants :
- une adresse de nœud d'un réseau géré par l'automate programmable industriel (200),
- un numéro d'unité d'un dispositif esclave (300-1, 300-2) comprenant plusieurs unités, le dispositif esclave (300-1, 300-2) étant connecté à l'automate programmable industriel (200), et
- un numéro de port du dispositif esclave (300-1, 300-2) comprenant les plusieurs unités, le dispositif esclave (300-1, 300-2) étant connecté à l'automate programmable industriel (200),
dans lequel le fichier de données de réglage est un fichier IODD, et
le dispositif d'objet de commande (400) est un dispositif IO-Link.

2. Automate programmable industriel (200) selon la revendication 1, dans lequel l'unité de spécification d'objet (2132) est adaptée pour spécifier plusieurs destinations du dispositif objet de commande (400) en utilisant l'information de destination comprise dans les données d'instruction provenant de l'interface machine humain.

3. Automate programmable industriel (200) selon la revendication 1,
dans lequel l'unité d'exécution (213) de BF comprend une unité de mise en correspondance de dispositif (2131) configurée pour mettre en correspondance un identifiant de dispositif du dispositif objet de commande (400), et
l'unité de mise en correspondance de dispositif (2131) est configurée pour acquérir l'identifiant de dispositif du dispositif objet de commande (400), et pour mettre en correspondance l'identifiant de dispositif acquis avec une information d'identifiant de dispositif comprise dans le fichier de données de réglage.

4. Automate programmable industriel (200) selon la revendication 3, dans lequel l'unité de mise en correspondance de dispositif (2131) est configurée pour acquérir l'identifiant de dispositif du dispositif objet de commande (400), et est adaptée pour commuter en fonction de si le traitement de mise en correspondance de l'identifiant de dispositif acquis avec les informations d'identifiant de dispositif comprises dans le fichier de données de réglage est effectué.

5. Automate programmable industriel (200) selon la revendication 3, dans lequel l'unité de mise en correspondance de dispositif (2131) est configurée pour acquérir un numéro de série unique au dispositif objet de commande (400), et est adaptée pour commuter en fonction de si le traitement de mise en correspondance de la mise en correspondance du numéro de série acquis avec un numéro de série décrit dans le fichier de données de réglage est effectué.

6. Procédé de commande d'un automate programmable industriel (200), l'automate programmable industriel (200) comprenant une unité d'exécution (213) de bloc fonctionnel (BF) et une mémoire (240) ;
le procédé comprenant :
une étape dans laquelle l'unité d'exécution (213) de BF exécute un BF comprenant une fonction de modification d'une valeur de réglage d'opération d'un dispositif objet de commande (400), dans lequel la valeur de réglage d'opération est utilisable pour amener le dispositif objet de commande (400) à effectuer une opération souhaitée ;
une étape dans laquelle un fichier de données de réglage auquel il est fait référence pendant le fonctionnement du BF est stocké dans la mémoire (240), le fichier de données de réglage comprenant au moins une information de destination et la valeur de réglage de fonctionnement, et
une étape consistant à spécifier une destination du dispositif objet de commande (400) en utilisant l'unité d'exécution (213) de BF,
dans lequel, conformément à une instruction de changement de réglage provenant d'une interface machine humaine, la spécification de la destination du dispositif objet de commande (400) basée sur une information de destination comprise dans le fichier de données de réglage et la spécification de la destination du dispositif objet de commande (400) basée sur une information de destination comprise dans des données d'instruction provenant de l'interface machine humaine sont adaptées pour être commutées dans l'étape de spécification d'objet,
dans lequel la destination du dispositif objet de commande (400) est spécifiée en utilisant au moins l'un des éléments suivants :
- une adresse de nœud d'un réseau géré par l'automate programmable industriel (200),
- un numéro d'unité d'un dispositif esclave (300-1, 300-2) comprenant plusieurs unités, le dispositif esclave (300-1, 300-2) étant connecté à l'automate programmable industriel (200), et
- un numéro de port du dispositif esclave (300-1, 300-2) comprenant les plusieurs unités, le dispositif esclave (300-1, 300-2) étant connecté à l'automate programmable industriel (200),
dans lequel le fichier de données de réglage est un fichier IODD, et
le dispositif d'objet de commande (400) est un dispositif IO-Link.

7. Procédé de commande d'un automate programmable industriel (200) selon la revendication 6, comprenant en outre :
l'étape de mise en correspondance d'un identifiant de dispositif du dispositif objet de commande (400) en utilisant l'unité d'exécution (213) de BF,
dans lequel, dans l'étape de mise en correspondance de dispositif, l'identifiant de dispositif du dispositif objet de commande (400) est acquis, et l'identifiant de dispositif acquis est mis en correspondance avec des informations d'identifiant de dispositif comprises dans le fichier de données de réglage.

8. Programme de commande comprenant des instructions qui, lorsque le programme est exécuté par un automate programmable industriel (200) comprenant une unité d'exécution (213) de bloc fonctionnel (BF) et une mémoire (240), amènent l'automate programmable industriel (200) à exécuter le procédé de la revendication 6 ou 7.
